# EUROPÄISCHE PATENTSCHRIFT

(11) **EP 1 101 916 B1**
(45) Veröffentlichungstag und Bekanntmachung des Hinweises auf die Patenterteilung: **21.06.2006**
(21) Anmeldenummer: 00123200.8
(22) Anmeldetag: 26.10.2000
(51) Int. Cl.: F02B 27/02, F02B 31/08

(54) **Saugrohr mit selektiver Kanalabschaltung**
Intake conduit with selective switching on or off of a conduit
Conduit d'admission avec déconnexion sélective d'un conduit

(30) Priorität: 20.11.1999 DE 19955906
(43) Veröffentlichungstag der Anmeldung: 23.05.2001
(73) Patentinhaber: Mann + Hummel GmbH, 71638 Ludwigsburg (DE)
(72) Erfinder: Jessberger, Thomas, 71679 Asperg (DE)
(74) Vertreter: Voth, Gerhard

(56) Entgegenhaltungen:
- EP-A- 0 258 207
- EP-A- 0 520 518
- EP-A- 0 701 057
- EP-A- 0 921 289
- DE-A- 3 836 550
- DE-A- 19 907 398
- DE-A- 19 913 561
- PATENT ABSTRACTS OF JAPAN vol. 007, no. 133 (M-221), 10. Juni 1983 (1983-06-10) & JP 58 048712 A (TOYOTA JIDOSHA KOGYO KK), 22. März 1983 (1983-03-22)

## Beschreibung

### Stand der Technik

Die Erfindung betrifft ein Saugrohr für eine Brennkraftmaschine mit jeweils mindestens zwei Ansaugquerschnitten pro Zylinder, wobei einer davon verschließbar ist, nach der Gattung des Patentanspruches 1 (siehe EP-A-5 205 128).

Derartige Saugrohre werden z. B. bei Motoren mit Direkteinspritzung des Kraftstoffes angewandt, um den Benzinverbrauch zu reduzieren. Durch die Abschaltung eines der Ansaugquerschnitte kann der Motor im Teillastbereich im sogenannten Magerbetrieb verwendet werden. Das Benzin wird in den Zylindern unter Luftüberschuß verbrannt, wobei die Entzündbarkeit des Gasgemisches dadurch gewährleistet werden muß, daß im Bereich der Zündkerze ein geringerer Luftüberschuß vorliegt als im restlichen Zylinderraum. Dies läßt sich durch eine entsprechende Schichtung der Luft erreichen. Die Luftschichtung wird durch eine gezielte Gestaltung der Geometrie des Ansaugtraktes erreicht. Dabei erhält die Ansaugluft eine Drallbewegung entweder um die Hochachse oder Längsachse des Brennraums. Diese kann bevorzugt durch eine Kanalabschaltung erzielt werden.

Ein weiteres Saugrohr, welches sich den beschriebenen Effekt zunutze macht, ist z. B. in der EP 701 057 offenbart. Im jeweils geschalteten Kanal zu den Zylindern befindet sich eine Schwenkklappe, die diesen zu verschließen vermag. Dadurch muß die Ansaugluft durch den jeweils anderen Strömungskanal fließen.

Um die beschriebenen Dralleffekte erzeugen zu können, muß die Ansaugluft jedoch möglichst störungsfrei durch das Saugrohr geleitet werden. Verwirbelungen, die durch Störung der Saugrohrgeometrie hervorgerufen werden, überlagern sich mit dem gewünschten Drall, wodurch der gewünschte Effekt einer Luftschichtung vermindert wird. Insbesondere durch Verschluß des schaltbaren Kanals entsteht in dem Saugrohr gemäß der EP 701 057 ein Totbereich in Form des ungenützten, verschlossenen Kanalstücks, der einen Totraum in dem durchströmten Saugrohr bildet. In diesem können sich Resonanzen ausbilden, außerdem verstärken sich die Strömungsverluste wegen der Erzeugung unerwünschter Verwirbelungseffekte.

Aufgabe der Erfindung ist es daher, ein Saugrohr für eine Brennkraftmaschine mit selektiver Kanalabschaltung zu schaffen, welches in allen Betriebszuständen eine verlustarme Durchströmung zuläßt. Diese Aufgabe wird durch die Merkmale des Patentanspruches 1 gelöst.

### Vorteile der Erfindung

Das erfindungsgemäße Saugrohr besitzt den bekannten Grundaufbau mit einem Einlaß und pro Zylinder mindestens zwei Auslässen. Als Auslässe dienen die zylinderkopfseitigen Mündungen von Saugkanälen, wobei diese mehrere Ansaugquerschnitte aufweisen, von denen einer durch eine Schwenkklappe verschließbar ist. Zwischen Einlaß und Saugkanälen kann ein Sammelraum angeordnet sein, der für eine Verteilung der Luft an die einzelnen Saugkanäle verantwortlich ist. Normalerweise sind pro Zylinder zwei Ansaugquerschnitte vorgesehen, wobei der eine nicht schaltbar und der andere durch die Schwenkklappe schaltbar ausgeführt ist.

Erfindungsgemäß ist die Schwenkklappe derart im Bereich der Verzweigung angeordnet, daß sie im verschlossenen Zustand als Leitfläche dienen kann, um die Strömung der Ansaugluft verlustarm in den offenen Ansaugquerschnitt umzuleiten. Hierdurch wird bei geschlossener Schaltklappe das Hauptströmungshindernis, nämlich die Schaltklappe selbst, derart ausgeführt, daß das Auftreten von Verwirbelungen in diesem Bereich minimiert wird. Ergebnis ist eine verlustärmere Strömung, wobei die Drallerzeugung für den Zylinder weniger durch entstehende Verwirbelungen im Saugrohr gestört wird. Hierdurch lassen sich bessere Ergebnisse hinsichtlich der Kraftstoffverbrennung im Magerbetrieb der Brennkraftmaschine erreichen. Dies führt zu geringeren Verbrauchswerten sowie einer geringeren Schadstoffbelastung der Umwelt.

Gemäß einer Ausgestaltung der Erfindung sind die Ansaugquerschnitte direkt nebeneinander angeordnet, so daß sie eine gemeinsame Trennwand aufweisen. Die Schwenkklappe ist dabei so ausgeführt, daß sie bei Verschluß des zu schaltenden Kanals an die gemeinsame Trennwand anstößt. Hierdurch wird ein einfacher Schaltmechanismus gebildet, wobei bei verschlossener Klappe der Saugkanal sich im Querschnitt verjüngt und in den ungeschalteten Ansaugquerschnitt mündet. Die Verjüngung des Querschnittes wird durch die Leitfläche der Schaltklappe mitgebildet.

Die beschriebene Verjüngung läßt sich durch eine entsprechende Klappengeometrie erreichen. Gemäß einer nicht zur Erfindung gehörende Ausgestaltung, ist die Schwenkklappe derart in der Wandung des Saugrohres untergebracht, daß sie in diesen hinein geklappt werden kann. Dabei verläuft die Drehachse der Schwenkklappe außerhalb des Ansaugquerschnittes bzw. des Saugkanals. Auch diese Maßnahme bewirkt eine Verringerung der Strömungswiderstände bei geöffneter Schaltklappe, da in diesem Falle nicht die Projektion der Schaltklappenwelle in den Strömungsquerschnitt hineinragt. Wird die Schwenkklappe geschaltet, wird dies durch ein Hineinklappen der Leitfläche in den Ansaugquerschnitt erreicht, wobei dies entgegen der Flußrichtung der Ansaugluft geschieht. Hiermit ist gemeint, daß die Drehachse sich an dem stromaufwärtigen Ende der Schaltklappe befindet. Die Leitfläche der Schaltklappe in geschlossenem Zustand ist gleichzeitig ein Teil der Wandung des Saugkanals in geöffnetem Zustand. Mit dieser Variante der Schaltklappe lassen sich besonders platzsparende Lösungen erzeugen. Die Schaltklappe kann flach ausgebildet sein und in die Wandung des Saugkanals eingelassen sein. Eine andere Möglichkeit ist die Gestaltung der Schwenkklappe als keilförmiger Klappenkörper, wobei die Drehachse im Bereich der Keilspitze untergebracht ist.

Die Erfindung sieht eine Schwenkklappe vor, die in Flußrichtung der Ansaugluft in den Saugkanal hinein geklappt wird. Dies bedeutet, daß die Drehachse der Schwenkklappe an ihrem stromaufseitigen Ende befestigt ist. Im geöffneten Zustand der Schwenkklappe befindet sich bei dieser Version die Leitfläche in einem hierfür vorgesehenen Totvolumen. Durch Schalten der Klappe wird die Leitfläche aus dem Totvolumen in den Saugkanalquerschnitt hineingeklappt. Im geöffneten Zustand liegt somit die Leitfläche außerhalb des Strömungsquerschnittes des Saugkanals. Dies hat den Vorteil, daß die Gestalt der Leitfläche ideal auf den geschlossenen Zustand der Schaltklappe angepaßt werden kann, da im geöffneten Zustand keine strömungstechnischen Aspekte beachtet werden müssen.

Die Ausgestaltung dieser Schwenkklappe sieht daher vor, daß diese ein Profil aufweist, das zu einer stetigen Veränderung der Querschnittsfläche im Saugkanal bei geschlossener Klappe führt. Damit sind auch die Übergänge vom Saugkanal zur Schwenkklappe und von der Schwenkklappe in den ungeschalteten Ansaugquerschnitt gemeint. Hierdurch läßt sich die Strömung der Ansaugluft weiter vergleichmäßigen mit den bereits beschriebenen Vorteilen.

Weitere Einzelheiten der Erfindung werden in den Zeichnungen anhand von schematischen Ausführungsbeispielen beschrieben. Hierbei zeigen
- Figur 1: ein teilweise aufgebrochen dargestelltes, nicht zur Erfindung gehörendes Saugrohr und
- Figur 2: den geschnitten dargestellten Ausschnitt eines Saugrohres im Bereich der Verzweigung, gemäß der vorliegenden Erfindung.

### Beschreibung der Ausführungsbeispiele

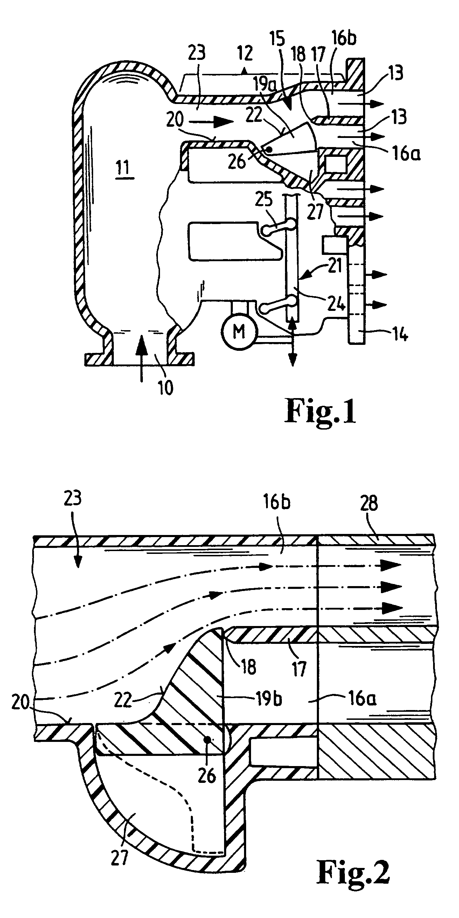

Das Saugrohr gemäß Figur 1 weist entsprechend des Weges der Luft einen Einlaß 10 in einen Sammelraum 11 auf, von dem Saugkanäle 12 abgehen, die in Auslässen 13 enden. Der Einlaß 10 kann z. B. mit einer Drosselklappe verbunden werden, die zum Ansaugtrakt der Brennkraftmaschine gehört (nicht dargestellt). Die Auslässe 13 weisen einen Zylinderkopfflansch 14 auf und können dadurch mit den Einlässen der Zylinder einer nicht dargestellten Brennkraftmaschine verbunden werden.

Die Saugkanäle weisen weiterhin eine Verzweigung 15 auf, welche den Saugkanal in jeweils zwei Ansaugquerschnitte 16a und 16b aufteilt. Diese sind durch eine Trennwand 17 voneinander abgeteilt, wobei diese eine Kante 18 aufweist, die zur Verzweigung des Saugkanals 12 weist.

In jedem Saugkanal 12 ist eine Schwenkklappe 19a vorgesehen, die im geöffneten Zustand in der Wandung 20 des Saugkanals 12 versenkt werden kann. Hierdurch werden pro Saugkanal beide Ansaugquerschnitte 16a, b freigegeben. Die Klappe kann durch ein Schaltgestänge 21 betätigt werden, wodurch sie in den Saugkanal 12 hineinschwenkt und sich auf der Kante 18 abstützt. Mit ihrer Leitfläche 22 sorgt die Schwenkklappe 19a dann für eine verlustarme Umleitung der Ansaugluft vom vollständigen Saugkanalquerschnitt 23 in den ungeschalteten Ansaugquerschnitt 16b. Der geschaltete Ansaugquerschnitt 16a wird hierdurch verschlossen.

Zur Betätigung des Schaltgestänges, bestehend aus einer Schaltstange 24 und Klappenkurbeln 25 ist ein Aktuator M vorgesehen, der z. B. durch einen elektrischen Antrieb oder eine Unterdruckdose gebildet sein kann. Durch Betätigung des Aktuators M läßt sich somit die Schwenkklappe um eine Drehachse 26 hin- und herschwenken, wobei zur Aufnahme der Schwenkklappe in geöffnetem Zustand ein Totvolumen 27 vorgesehen ist, welches an den Ansaugquerschnitt angrenzt. Die Drehachse an der Schwenkklappe ist auf der stromaufseitigen Seite angebracht, so daß diese entgegen der Strömungsrichtung der Ansaugluft in den Saugkanal 12 hineinschwenkt. Die Strömungsrichtung der Ansaugluft ist durch Pfeile angedeutet.

Die Figur 2 dient zur Veranschaulichung des Profils der Leitfläche 22 einer Schwenkklappe 19b. Diese ist im geschlossenen Zustand dargestellt, wodurch die Strömung aus dem Saugkanalquerschnitt 23 in den ungeschalteten Ansaugquerschnitt 16b umgeleitet wird. Der geschaltete Ansaugquerschnitt 16a wird nicht durchströmt. Die Schwenkklappe 19b im offenen Zustand ist durch die strichpunktierte Kontur angedeutet. Diese befindet sich dann vollständig im Totvolumen 27, aus dem sie um die Drehachse 26 herum in Richtung der Strömung (durch Pfeile angeordnet) in den Saugkanalquerschnitt 23 hineingeschwenkt werden kann.

Das Profil der Leitfläche 22 beschreibt einen S-Schlag. Hierdurch wird die stetige Umleitung der Ansaugluft aus dem Saugkanalquerschnitt 23 in den Ansaugquerschnitt 16b erreicht. Die Wandung 20 des Saugkanals geht, ohne einen Knick zu beschreiben, in die Leitfläche 22 über. Das Ende der Leitfläche stützt sich auf der Kante 18 der Trennwand 17 ab. Auch hier geht die Krümmung der Leitfläche 22 ohne einen Knick in die Trennwand 17 über. Ein Zylinderkopf 28, an dem das Saugrohr befestigt ist, ist in Figur 2 ebenfalls angedeutet.

## Patentansprüche

1. Saugrohr für eine Brennkraftmaschine, enthaltend einen Einlaß (10) für Verbrennungsluft und mindestens zwei Auslässe (13) pro Zylinder der Brennkraftmaschine, wobei
- die jeweils beiden Auslässe die zylinderseitigen Mündungen jeweils eines sich verzweigenden Saugkanals (12) darstellen,
- der jeweilige Saugkanal (12) in Flußrichtung der Ansaugluft gesehen nach der Verzweigung (15) je einen Ansaugquerschnitt (16a, b) pro Auslaß aufweist,
- pro Saugkanal in einem Ansaugquerschnitt (16a) eine Schwenkklappe (19a, b) zum Verschluß desselben, deren Drehachse außerhalb des Ansaugquer schnittes angeordnet ist, untergebracht ist, und
- die Schwenkklappe im Bereich der Verzweigung derart angeordnet ist, daß durch diese im verschlossenen Zustand eine Leitfläche (22) zur verlustarmen Umleitung der Ansaugluft zum offenen Ansaugquerschnitt (16b) hin gebildet ist
**dadurch gekennzeichnet, daß**
die Leitfläche (22) über ein Profil verfügt, welches einen S-Schlag beschreibt, wobei der Saugkanal (12) Ober eine Wandung (20) verfügt, welche ohne einen Knick zu beschreiben in die Leitfläche (22) übergeht.

2. Saugrohr nach Anspruch 1, **dadurch gekennzeichnet, daß** die Ansaugquerschnitte (16a, b) eine gemeinsame Trennwand (17) aufweisen, wobei diese an der Verzweigung eine Kante (18) aufweist, an die die Schwenkklappe (19a, b) in verschlossenem Zustand angrenzt.

3. Saugrohr nach einem der Ansprüche 1 oder 2, **dadurch gekennzeichnet, daß** die Schwenkklappe (19b) in Flußrichtung der Ansaugluft in den Saugkanal (12) hineinklappbar ist, wobei die Leitfläche (22) im geöffneten Zustand der Schwenkklappe in einem Totvolumen (27) angeordnet ist.

## Claims

1. Intake pipe for an internal combustion engine, said intake pipe including an inlet (10) for combustion air and at least two outlets (13) per cylinder of the internal combustion engine, wherein
- each of the two outlets represents each of the openings of a branching intake duct (12) on the cylinder side,
- the respective intake duct (12), when viewed in the direction of flow of the intake air, includes one intake cross-section (16a, b) per outlet downstream of the branching (15),
- a pivotal flap (19a, b) is accommodated per intake duct in an intake cross-section (16a) for the closing of said intake duct, the axis of rotation of said pivotal flap being disposed externally of the intake cross-section, and
- the pivotal flap is disposed in the region of the branching in such a manner that, in the closed state, it forms a baffle (22) for the low-loss re-routing of the intake air towards the open intake cross-section (16b), **characterised in that** the baffle (22) has a profile that is in the shape of an S, wherein the intake duct (12) has a wall (20) that merges into the baffle (22) in an uninterrupted manner.

2. Intake pipe according to claim 1, **characterised in that** the intake cross-sections (16a, b) include a common partition wall (17), wherein the said partition wall includes at the branching an edge (18), against which the pivotal flap (19a, b) abuts in the closed state.

3. Intake pipe according to one of claims 1 or 2, **characterised in that** the pivotal flap (19b) is pivotable inwards in the direction of flow of the intake air into the intake duct (12, wherein the baffle (22) is disposed in a dead volume (27) in the open state of the pivotal flap.

## Revendications

1. Conduit d'admission pour un moteur à combustion interne, comprenant une entrée (10) pour l'air de combustion et au moins deux sorties (13) par cylindre du moteur à combustion interne, dans lequel :
- les deux sorties respectives représentent les embouchures côté cylindre d'un canal d'admission respectivement divisé (12),
- le canal d'admission respectif (12), vu dans la direction d'écoulement de l'air d'admission, présente après l'embranchement (15) une section de canal d'admission respective (16a, 16b) par sortie,
- par canal d'admission, un clapet pivotant (19a, b) est disposé dans une section d'admission (16a) pour la fermeture de celle-ci, et son axe de rotation est placé hors de la section d'admission, et
- le clapet pivotant est disposé dans la région de l'embranchement, pour former une face de déviation (22) à l'état fermé, qui dévie sans perte l'air d'admission vers la section d'admission ouverte (16b),
**caractérisé en ce que**
la face de déviation (22) présente un profil qui décrit une courbe en S, alors que le canal d'admission (12) comprend une paroi (20) qui prolonge la face de déviation (22) sans présenter de rupture.

2. Conduit d'aspiration selon la revendication 1,
**caractérisé en ce que**
les sections d'admission (16a, b) présentent une paroi de séparation commune (17), qui présente à l'embranchement (15) une arête (18) sur laquelle le clapet pivotant (19a, b) se termine à l'état fermé.

3. Conduit d'admission selon l'une quelconque des revendications 1 ou 2,
**caractérisé en ce que**
le clapet pivotant (19b) est rabattable dans le canal d'admission (12) dans la direction d'écoulement de l'air d'admission, et la face de déviation (22) est dans un volume mort (27) à l'état ouvert du clapet pivotant.
